# EUROPÄISCHE PATENTSCHRIFT

(11) **EP 2 510 475 B1**
(45) Veröffentlichungstag und Bekanntmachung des Hinweises auf die Patenterteilung: **10.02.2016**
(21) Anmeldenummer: 11705188.8
(22) Anmeldetag: 15.02.2011
(51) Int. Cl.: G06F 21/12, G06F 21/14, G06F 21/72, G06F 21/77

(54) **HARDWARE-EINRICHTUNG**
HARDWARE DEVICE
DISPOSITIF MATÉRIEL

(30) Priorität: 26.02.2010 DE 102010009458
(43) Veröffentlichungstag der Anmeldung: 17.10.2012
(73) Patentinhaber: Siemens Aktiengesellschaft, 80333 München (DE)
(72) Erfinder: BRAUN, Michael, 80999 München (DE); DICHTL, Markus, 80636 München (DE); MEYER, Bernd, 81739 München (DE)
(86) Internationale Anmeldenummer: PCT/EP2011/052167
(87) Internationale Veröffentlichungsnummer: WO 2011/104136

(56) Entgegenhaltungen:
- WO-A1-2009/125919
- WO-A2-2008/054456
- COLLBERG C S ET AL: "Watermarking, tamper-proofing, and obfuscation - tools for software protection", IEEE TRANSACTIONS ON SOFTWARE ENGINEERING, IEEE SERVICE CENTER, LOS ALAMITOS, CA, US, Bd. 28, Nr. 8, 1. August 2002 (2002-08-01) , Seiten 735-746, XP011094684, ISSN: 0098-5589, DOI: DOI:10.1109/TSE.2002.1027797
- AMITABH SAXENA ET AL: "Towards Security Notions for White-Box Cryptography", 7. September 2009 (2009-09-07), INFORMATION SECURITY, SPRINGER BERLIN HEIDELBERG, BERLIN, HEIDELBERG, PAGE(S) 49 - 58, XP019129394, ISBN: 978-3-642-04473-1 das ganze Dokument

## Beschreibung

Die vorliegende Erfindung betrifft eine Hardware-Einrichtung, welche insbesondere programmsteuerbar ist, wobei der Ablauf des Programms von einem kryptographischen Schlüssel abhängt.

Bei vielen Hardware-Einrichtungen, beispielsweise bei Automatisierungssystemen, ist es gewünscht, die Durchführung von Programmen ausschließlich durch authentifizierte Nutzer oder Käufer zu erlauben. Mit einem Steuerprogramm ausgestattete Hardware-Einrichtungen sollen zudem davor geschützt werden, dass derart gespeichert vorliegender Programmcode von Unberechtigten ausgelesen und weiter verbreitet wird.

Eine solche Hardware-Einrichtung ist z.B. aus der WO 2008/054456 bekannt.

Es wurden daher in der Vergangenheit geheime Schlüssel in Hardware-Einrichtungen implementiert, mittels derer ein verschlüsselt abgespeichertes oder einprogrammiertes Programm entschlüsselt und ausgeführt werden kann. Die Abspeicherung derartiger kryptographischer Schlüssel in den Hardware-Einrichtungen soll daher möglichst sicher erfolgen. Zum sicheren Abspeichern von beispielsweise Schlüsseldaten oder Schlüsselmaterialien sind mehrere Möglichkeiten entwickelt worden und auch mit zukünftigen, hinsichtlich der Sicherheit verbesserten Verfahren, ist zu rechnen. Ein besonderes Problem entsteht, wenn Hardware-Einrichtungen bereits weit verbreitet im Einsatz sind, jedoch mit veralteten Sicherheitsmaßnahmen für die verwendeten geheimen Schlüssel ausgestattet sind. Üblicherweise wurde bei der Neuentwicklung von Sicherheitsmaßnahmen die alte Hardware-Einrichtung ausgetauscht, sodass weitere Anpassungen des vorhandenen Systems notwendig waren. Auch der Einsatz von Hardware-Einrichtungen mit verbesserten Sicherheitsmechanismen kann problematisch sein, da häufig keine Abwärtskompatibilität besteht.

Es ist daher eine Aufgabe der vorliegenden Erfindung, eine verbesserte Hardware-Einrichtung bereitzustellen.

Diese Aufgabe wird durch eine Hardware-Einrichtung mit den Merkmalen des Patentanspruchs 1 gelöst.

Demgemäß umfasst eine Hardware-Einrichtung ein erstes Sicherheitsmodul mit einem ersten gespeicherten kryptographischen Schlüssel zum Entschlüsseln von gespeicherten Daten. Es ist ein zweites Sicherheitsmodul mit einem zweiten gespeicherten kryptographischen Schlüssel zum Entschlüsseln von gespeicherten Daten vorgesehen. Ferner sieht die Hardware-Einrichtung eine Verarbeitungsplattform zum Ausführen eines Steuerprogramms in Abhängigkeit von dem ersten oder dem zweiten kryptographischen Schlüssel vor, wobei die Verarbeitungsplattform derart eingerichtet ist, dass die gespeicherten Daten mittels des ersten oder zweiten kryptographischen Schlüssels in das Steuerprogramm entschlüsselt werden.

Die Sicherheitsmodule mit ihren kryptographischen Schlüsseln können beispielsweise gemäß unterschiedlicher Sicherheitsstufen ausgebildet werden. Es ist zum Beispiel denkbar, dass das erste Sicherheitsmodul den kryptographischen Schlüssel lediglich in der Art einer Code-Obfuscation, also in einer schwer lesbaren Form abspeichert. Das zweite Sicherheitsmodul kann dann einer höheren Sicherheitsstufe entsprechend, den krytographischen Schlüssel beispielsweise auf einer Smart-Card oder einem Dongle tragen. Die Hardware-Einrichtung ist somit kompatibel zu mehreren Sicherheitsstufen. Die Hardware-Einrichtung kann gemäß sich neu ergebender Sicherheitsanforderungen oder technischer Entwicklungen angepasst sein. Insbesondere ist es möglich, dass die Hardware-Einrichtung abwärtskompatibel hinsichtlich der Bereitstellung von den gespeicherten kryptographischen Schlüsseln ausgestaltet ist.

Als Verarbeitungsplattform wird insbesondere eine Einrichtung bezeichnet, die ein codiertes Computerprogramm abarbeiten kann. Zum Beispiel eignen sich Mikrocontroller, Mikroprozessoren aber auch softwarebasierte Plattformen, wie Java-Clients, als Verarbeitungsplattform.

Es ist ferner möglich, die Hardware-Einrichtung mit einem dritten Sicherheitsmodul auszustatten, welches einen dritten gespeicherten kryptographischen Schlüssel zum Entschlüsseln von gespeicherten Daten umfasst. Vorzugsweise sind die in den Sicherheitsmodulen abgespeicherten kryptographischen Schlüssel mittels unterschiedlicher Sicherheitsverfahren abgespeichert. Durch das Vorhalten mehrerer Sicherheitsmodule in der Hardware-Einrichtung ist diese kompatibel mit vielen Sicherheitsverfahren.

Es ist zum Beispiel denkbar, dass das erste, zweite oder dritte Sicherheitsmodul der Hardware-Einrichtung ausgestaltet ist, um den ersten, zweiten oder dritten kryptographischen Schlüssel mittels Code-Obfuscation oder White-Box-Kryptographie abzuspeichern. In diesem Fall ist der jeweilige kryptographische Schlüssel beispielsweise verteilt in einem ROM-Speicher abgelegt oder nur einfach codiert. Diese einfache Sicherheitsstufe basiert in der Regel auf einer Software-Lösung und bildet eine niedrige Sicherheitsstufe.

Es ist auch möglich, eines der Sicherheitsmodule mit einer Schnittstelle für ein externes Speichermedium auszustatten, wobei der jeweilige kryptographische Schlüssel dann auf einem externen Speichermedium abgespeichert ist.

Das Speichermedium kann beispielsweise in der Art eines Datenträgers wie zum Beispiel als Speicherkarte, USB-Stick, Floppy-Disk, CD-ROM oder DVD implementiert werden. Es ist auch der Begriff Sicherheitstoken oder Dongle geläufig.

Während die vorgenannte Basissicherheitsstufe lediglich auf einer Software-Anwendung basiert, ist bei der zweiten Sicherheitsstufe mit einem Sicherheitstoken eine verbesserte Authentifizierung möglich. Der Betrieb der Hardware-Einrichtung mit dem verschlüsselt abgespeicherten Steuerprogramm ist dann nur mit dem jeweiligen Speichermedium, das den kryptographischen Schlüssel trägt, möglich.

Bei einer Ausführungsform ist auf dem Speichermedium, wie beispielsweise dem Sicherheitstoken, ferner ein Entschlüsselungsprogramm zum Entschlüsseln von in der Hardware-Einrichtung gespeicherten Daten in das Steuerprogramm abgespeichert. Es ist auch denkbar, dass nur eine Programm oder Programmteil, wie eine Routine, auf dem Speichermedium abgelegt ist, die es ermöglicht, den kryptographischen Schlüssel im Speichermedium auszulesen. In der Folge kann dann die Verarbeitungsplattform das Steuerprogramm entschlüsseln und durchführen.

Bei einem weiteren Ausführungsbeispiel der Hardware-Einrichtung weist das erste, zweite oder dritte Sicherheitsmodul einen manipulationssicheren Speicher zum Speichern des ersten, zweiten oder dritten kryptographischen Schlüssels auf. Als manipulationssicher sind beispielsweise versiegelte oder mechanisch besonders behandelte Speichereinrichtungen möglich.

Als manipulationssichere Speicher gelten zum Beispiel auch Sicherheitsmodule, die derart eingerichtet sind, dass der jeweilige kryptographische Schlüssel mittels eines Verfahrens der Temper-Detection oder Temper-Reaction abgespeichert wird. Eine Reihe von sicheren Hardware-Umgebungen für Sicherheitsmodule sind bekannt, bei denen physikalische oder softwarebasierte Maßnahmen zur Temper-Detection eingesetzt werden. Dabei können zum Beispiel Sensoren, fehlererkennende Codes oder auch redundante Hardware-Einrichtungen eingesetzt werden. Als Temper-Reaction sind zum Beispiel Mechanismen bekannt, bei denen die gespeicherten Daten, also der kryptographische Schlüssel, zerstört wird, falls ein nicht authentifizierter Zugriff versucht wird.

Bei einer Variante der Hardware-Einrichtung ist in einem der Sicherheitsmodule mindest ein kryptographischer Schlüssel eines anderen Sicherheitsmoduls abgespeichert. Es ist somit möglich, dass das Sicherheitsmodul mit der höchsten Sicherheitsanforderung auch Schlüsselmaterial von älteren Generationen umfasst. Vorzugsweise werden die kryptographischen Schlüssel unabhängig voneinander erzeugt. Damit werden selbst bei Kenntnis der beispielsweise nur softwaremäßig codiert abgespeicherten kryptographischen Schlüssel nicht Sicherheitsmaßnahmen höherer Ordnung oder Stufen, beispielsweise Schlüssel in manipulationssicheren Speichern, kompromittiert. Die verwendeten kryptographischen Schlüssel können insbesondere asymmetrische Schlüssel sein. Es ist auch möglich, dass die Schlüssel zum Verschlüsseln von Daten geeignet sind.

Die Hardware-Einrichtung kann auch weitere Sicherheitsmodule mit weiteren gespeicherten kryptographischen Schlüsseln zum Entschlüsseln von gespeicherten Daten umfassen. Grundsätzlich lässt sich die Hardware-Einrichtung für beliebig viele Generationen von Sicherheitsmechanismen kompatibel gestalten.

Die Hardware-Einrichtung umfasst optional eine Speichereinrichtung, welche derart ausgestaltet ist, dass ein mit einem der kryptographischen Schlüssel verschlüsselt abgespeichertes Steuerprogramm für die Verarbeitungsplattform bereitgestellt wird.

Die Hardware-Einrichtung ist insbesondere als programmierbare Steuereinrichtung eines Automatisierungssystems vorgesehen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

Es zeigen:
- Figur 1:: schematische Darstellungen von ersten Ausführungsbeispielen einer Hardware-Einrichtung; und
- Figur 2:: eine schematische Darstellung eines Ausführungsbeispiels einer Steuereinrichtung eines Automatisierungssystems als HardwareEinrichtung.

In den Figuren sind gleiche oder funktionsgleiche Elemente mit denselben Bezugszeichen versehen worden, sofern nichts Anderes angegeben ist.

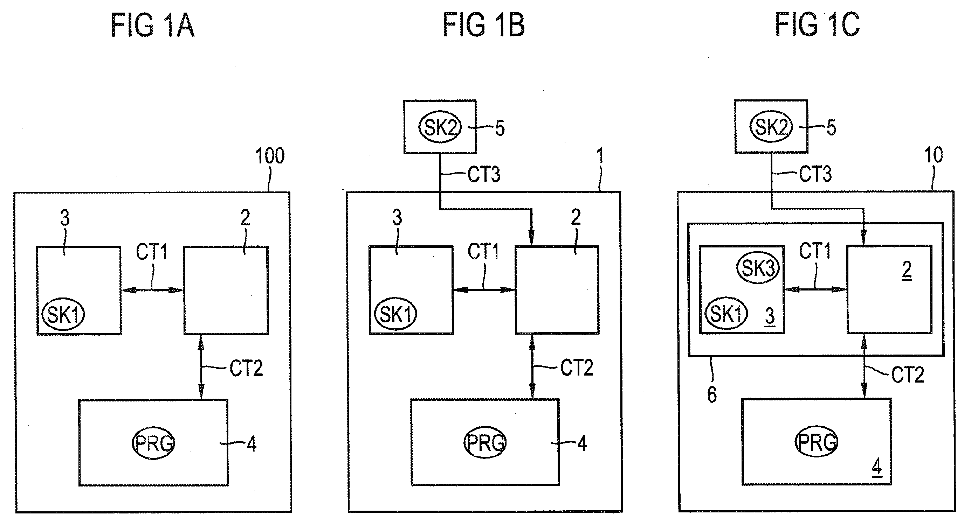

Die Figur 1 zeigt schematische Darstellungen von Ausführungsbeispielen einer Hardware-Einrichtung. Figur 1A zeigt eine Hardware-Einrichtung 100, die einen Mikroprozessor 2 als Verarbeitungsplattform, einen Speicher, beispielsweise RAM-Speicher 4 und einen ROM-Speicher 3 umfasst. Der Mikroprozessor 2 kann sowohl auf den RAM-Speicher 4 als auch auf den ROM-Speicher 3 über Steuersignale CT1, CT2 zugreifen. In dem RAM-Speicher 4 ist beispielsweise ein Steuerprogramm PRG abgespeichert, welches von dem Mikroprozessor 2 ausgeführt werden kann.

Damit nicht unberechtigte Dritte das Programm PRG auslesen und weiter verwenden können, ist das Programm PRG mittels eines kryptographischen Verfahrens unter Verwendung eines kryptographischen Schlüssels codiert bzw. verschlüsselt. Ein kryptographischer Schlüssel SK1, der die Entschlüsselung des gespeicherten Programms PRG ermöglicht, liegt abgespeichert in dem ROM-Speicher 3 vor. In dem ROM-Speicher 3 können weitere Daten, beispielsweise Firmware oder ein Betriebssystem für den Betrieb der Hardware-Einrichtung 100 gespeichert sein.

Es ist nun insbesondere gewünscht, den kryptographischen Schlüssel SK1 sicherer abzulegen, so dass ein Angreifer diesen nicht auslesen kann und verschlüsselte Daten weiter verwenden kann. Ein sicheres Abspeichern und Bereitstellen von kryptographischen Schlüsseln ist über eine Vielzahl von Sicherheitsanwendungen möglich. Eine einfache, hier beispielhaft angegebene Möglichkeit besteht darin, Software-Maßnahmen vorzusehen. Bei bekannten Anwendungen wie digitales Rechte-Management-Systemen (DRM) bei Mediaplayern oder DVD-Spielern, wird lediglich eine besondere Codierung des Schlüssels in dem als Sicherheitsmodul fungierenden ROM-Speicher 3 verwendet. Denkbar ist zum Beispiel ein Verfahren der Code-Obfuscation oder der sogenannten White-Box-Kryptographie, welche die entsprechend kodierten Daten gegen ein Reverse-Engineering schützt. Der ursprünglich einfach lesbarere kryptographische Schlüssel SK1 wird dabei in eine schwieriger lesbarere Form gebracht, hat jedoch die gleiche Funktionalität wie der Original-Schlüssel. Eine einfache Möglichkeit der Code-Obfuscation besteht beispielsweise darin, eine konstante Zahl zu dem Schlüsselwert hinzuzufügen oder einzelne Teile des Schlüssels in dem Datensystem des Speichers verteilt abzulegen. Zum Beispiel kann ein Array in mehrere Arrays abgebildet und abgelegt werden. Es wird damit eine verhältnismäßig niedrige Stufe für das sichere Abspeichern von kryptographischen Schlüsseln durch White-Box-Kryptographien oder Code-Obfuscation verwendet.

Es ist meist gewünscht, diese niedrige Sicherheitsstufe beispielsweise bei einem Hardware-Upgrade zu verbessern. Bei Hardware-Einrichtungen einer nächsten Generation ist dabei zum Beispiel angedacht, Sicherheitstoken, wie Smart-Cards oder Dongles zur Erhöhung der Sicherheit einzusetzen. Problematisch ist üblicherweise, dass die zuvor vorgesehen Maßnahmen einer niedrigeren Sicherheitsstufe, nicht weiter verwendet werden können.

Figur 1B zeigt ein Ausführungsbeispiel einer Hardware-Einrichtung 1, die einerseits dieselben Elemente wie die Basis-Hardware-Einrichtung 100 aufweist, jedoch zusätzlich ein Sicherheitsmodul 5 umfasst, dass eine höhere Sicherheitsstufe als die Code-Obfuscation oder White-Box-Kryptographie bietet. Es ist daher ferner als zweites Sicherheitsmodul ein Speichermedium 5 vorgesehen, dass einen zweiten kryptographischen Schlüssel SK2 abgespeichert bereitstellt. Der Mikroprozessor 2 kann über eine geeignete Schnittstelle den kryptographischen Schlüssel SK2 über Steuersignale CT3 aus dem Speichermedium 5 auslesen. Als Speichermedium wird zum Beispiel ein USB-Stick, eine Smart-Card oder ein Dongle verwendet. Auch andere Memory-Cards gängiger Formate mit dem abgespeicherten kryptographischen Schlüssel SK2 sind denkbar. Durch den Security-Token 5 wird eine Hardwarekomponente bereitgestellt, die eine sichere Authentifizierung der Hardware-Einrichtung 1 ermöglicht und damit ein Ablauf des verschlüsselt im RAM-Speicher 4 vorliegenden Steuerprogramms PRG ermöglicht.

Der Token 5 mit dem abgespeicherten kryptographischen Schlüssel SK2 ist ein einmaliger Gegenstand, der im Wesentlichen gegen Manipulation und Vervielfältigung besonders gesichert ist. Der Speicherschaltkreis des Tokens 5 für die Abspeicherung des kryptographischen Schlüssel SK2 kann zum Beispiel in Kunststoff eingegossen sein. Der Token 5 kann darüber hinaus als Smart-Card ausgebildet sein und weitere Mikrochips umfassen. Es ist auch möglich, dass die eigentliche Entschlüsselung des Programmcodes PRG durch den Token 5 selbst erfolgt und erst anschließend das für den Mikroprozessor 2 lesbare Steuerprogramm durchgeführt wird.

In der Hardware-Einrichtung 1 gemäß dem Beispiel der Figur 1B kann daher einerseits die niedrige Sicherheitsstufe unter Verwendung von Software-Maßnahmen beim Speichern des kryptographischen Schlüssels SK1 betrieben werden, andererseits jedoch auch die höhere Sicherheitsstufe mit einem Security-Token 5 erreicht werden. Es ist dazu möglich, mehrere Programmversionen PRG in dem RAM-Speicher 4 vorzusehen. Da vorzugsweise die beiden Schlüssel SK1 und SK2 unabhängig voneinander erzeugt sind, kompromittiert ein bekannt gewordener kryptographischer Schlüssel SK1 nicht die einer höheren Sicherheitsstufe entsprechenden Maßnahmen für den kryptographischen Schlüssel SK2. Prinzipiell ist auch denkbar, dass der kryptographische Schlüssel SK1 auf dem Sicherheitstoken 5 vorgesehen ist.

Die Figur 1C zeigt ein Ausführungsbeispiel einer weiteren Ausbaustufe einer Hardware-Einrichtung 10. Um eine noch höhere Sicherheitsstufe zu erzielen, sind in der Regel spezielle Hardware-Maßnahmen notwendig. Eine manipulationssichere Hardware-Umgebung kann zum Beispiel durch aufwendiges Vergießen oder Schützen des eingesetzten ROM-Speichers 3 und des Mikroprozessors 2 erfolgen. In der Figur 1C ist der hardwaremäßig manipulationssichere Bereich durch den Kasten 6 angedeutet. Als manipulationssichere Techniken gelten zum Beispiel auch Temper-Detection und Temper-Reaction. Das heißt, es werden zusätzliche Sensoren vorgesehen, die nicht authentifizierte Zugriffe auf die abgespeicherten Daten, hier die kryptographischen Schlüssel SK1 und SK3, erkennen. Bei einem derartigen Angriffsfall kann zum Beispiel der gesamte Speicher 3 gelöscht werden, so dass der Mikroprozessor 2 seine Steueraufgaben, also die Durchführung des Steuerprogramms PRG nicht mehr durchführen kann. Abweichend von der Darstellung der Figur 1C können in dem manipulationssicheren Bereich auch alle kryptographischen Schlüssel der sicherheitstechnischen Vorstufen abgespeichert sein.

Die Hardware-Einrichtung 10 ist in der Lage, verschlüsselte Daten, die einem Steuerprogramm entsprechen, gemäß aller Vorversionen von Verschlüsselungsmechanismen oder Sicherheitsstufen durchzuführen. Insofern ist die Hardware-Einrichtung 10 abwärtskompatibel mit den Vorstufen der Figuren 1A und 1B. Das verschlüsselte Steuerprogramm PRG im RAM-Speicher 4 kann ferner getrennt über ein Kommunikationsnetzwerk der Hardware-Einrichtung zugespielt werden.

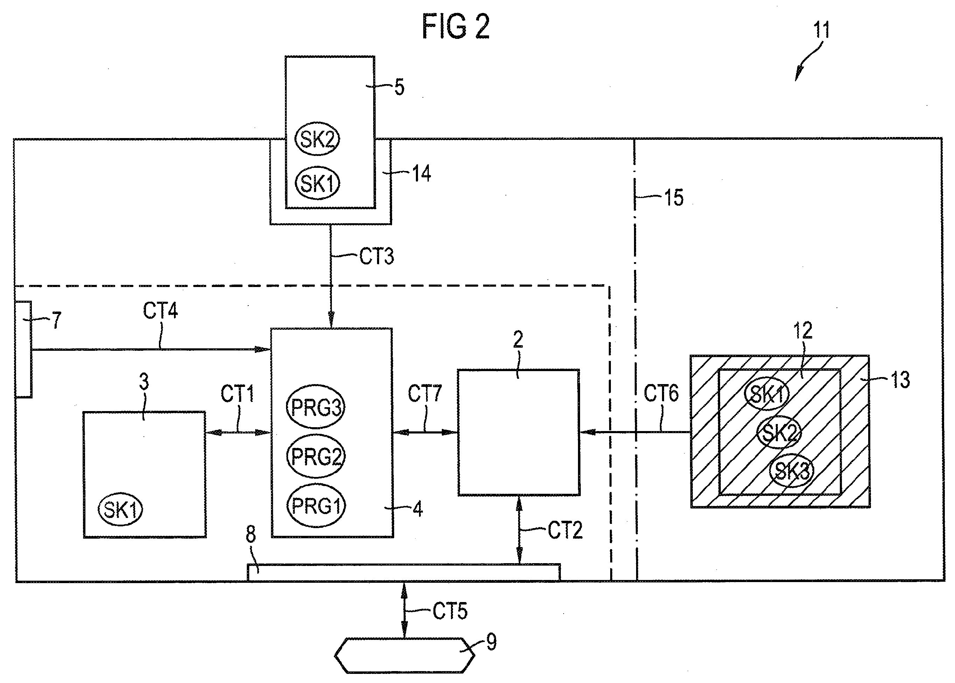

Die Figur 2 zeigt eine schematische Darstellung einer Steuereinrichtung eines Automatisierungssystems, welche als abwärtskompatible Hardware-Einrichtung ausgestaltet ist. Insbesondere bei Automatisierungssystemen wird die Steuereinrichtung mit Steuerprogrammen programmiert, um anschließend die jeweilige Steueraufgabe zu erfüllen. Dabei wird der Programmcode für das Steuerprogramm nur verschlüsselt auf die Steuereinrichtungen übertragen, welche einen entsprechenden kryptographischen Schlüssel haben, damit das Programm entschlüsselt und ausgeführt werden kann.

Die Steuereinrichtung 11, welche eine Hardware-Einrichtung ist, hat dabei eine Verarbeitungsplattform, wie zum Beispiel einen Mikroprozessor 2. Der Mikroprozessor 2 ist an einen RAM-Speicher 4 gekoppelt. Ferner umfasst die Steuereinrichtung 11 eine Schnittstelle 8 zur Ankopplung an einen Steuerbus oder ein Datennetzwerk 9. Der Mikroprozessor 2 erzeugt entsprechende Steuersignale CT2, welche an den Daten- oder Regelbus 9 als Signal CT5 übergeben werden.

Wie bereits erläutert wurde kann der RAM-Speicher 4 insbesondere mit Steuerprogrammen beschrieben werden. Dies erfolgt beispielsweise über eine Fernwartung der Steuereinrichtung 11, die ebenfalls über eine Schnittstelle 7 beispielsweise an ein Kommunikationsnetzwerk ankoppelbar ist.

Ferner ist ein ROM-Speicher 3 vorgesehen, der geeignet ist, einen kryptographischen Schlüssel SK1 einer ersten niedrigen Sicherheitsstufe abzuspeichern. Im Wesentlichen entspricht die gestrichelt umrandete Ausstattung der Steuereinrichtung 11 der schematischen Hardware-Einrichtung 100 aus Figur 1A. Man kann diese Ausbaustufe auch als Grundstufe hinsichtlich der Sicherheitsstufe verstehen.

Ferner umfasst die Steuereinrichtung 11 eine Schnittstelleneinrichtung 14, zum Ankoppeln eines Security-Dongles oder eines Security-Tokens. Der Token 5 kann als Smart-Card ausgestaltet sein und speichert sowohl den ersten kryptographischen Schlüssel SK1 wie auch einen weiteren kryptographischen Schlüssel SK2. Über die Schnittstelleneinrichtung 14 und Steuersignale CT3 lassen sich die abgespeicherten Daten des Dongles 5 in den RAM-Speicher 4 einlesen.

Darüber hinaus umfasst die Steuereinrichtung 11 eine weitere hardwareimplementierte Sicherheitsstufe, welche rechts von der gestrichpunkteten Linie 15 angedeutet ist. Dazu ist ein weiterer ROM-Speicher 12 vorgesehen, in den drei verschiedene kryptographische Schlüssel SK1, SK2 und SK3 eingeschrieben sind. Der ROM-Speicher 12 ist manipulationssicher ausgeführt, was durch den schraffierten Bereich 13 angedeutet ist. Somit sind die in dem ROM-Speicher 12 vorliegenden Daten besonders sicherheitsgeschützt. Ein Auslesen ist ohne Zerstörung der Daten nicht möglich.

Die Steuereinrichtung 11 für ein Automatisierungssystem entspricht damit beispielsweise einem aktuell bestmöglichen Sicherheitsniveau. Darunter liegende Sicherheitsniveaus oder - stufen umfassen den Einsatz von Security-Dongles 5 und das rein softwaremäßige sichere Abspeichern 3. Die Steuereinrichtung 11 ist in der Lage, die Schlüsselmaterialien SK1 und SK2 auch der unterhalb der aktuellen Sichheitsstufe bzw. liegenden Ausbaustufen zu verarbeiten. Es ergibt sich somit eine vollständige funktionale Abwärtskompatibilität der Steuereinrichtung 11.

Bei dem Beispiel in der Figur 2 ist in dem RAM-Speicher 4 jeweils eine Version des auszuführenden Steuerprogramms PRG1, PRG2, PRG3 abgespeichert. Die Version PRG1 ist verschlüsselt und lässt sich über den kryptographischen Schlüssel SK1 entschlüsseln und durch den Mikroprozessor 2 ausführen. Die Version PRG2 lässt sich mittels des kryptographischen Schlüssels SK2 entschlüsseln und ausführen. Die Version PRG3 lässt sich mittels des kryptographischen Schlüssels SK3 entschlüsseln und durch den Mikroprozessor oder Controller 2 ausführen. Je nach Ausführungsform der Steuereinrichtung 11, welche Sicherheitsmodule mehrerer Generationen umfasst, kann diese bereits im Feld befindliche Einrichtungen einer niedrigeren Ausbaustufe oder älteren Generation der Steuereinrichtung, welche lediglich die links der gestrichpunkteten Linie 15 vorliegenden Elemente umfasst, ersetzen. Änderungen im Programmcode oder einer Verschlüsselung, wie Umkodierungen, sind dann nicht zusätzlich notwendig. Dies führt zu einer aufwandsgünstig implementierbaren Generationenfolge von Steuereinrichtungen.

Die Abwärtskompatibilität der Steuereinrichtung 11 stellt insbesondere sicher, dass verschlüsselte Steuerungsprogramme PRG1 oder PRG2 bereitgestellt werden, die ablauffähig bleiben. Es wird somit ein abwärtskompatibles System geschaffen, das keine Umprogrammierung von bestehenden, im Feld eingesetzten, Steuereinrichtungen oder anderen Elementen des Automatisierungssystems erfordert.

### Bezugszeichenliste:

- 1: Hardware-Einrichtung
- 2: Mikroprozessor
- 3: RAM-Speicher
- 4: ROM-Speicher
- 5: externe Speicherkarte
- 6: manipulationssicherer Bereich
- 7, 8: Kommunikationsschnittstelle
- 9: Steuerbus
- 10, 11: Hardware-Einrichtung
- 12: ROM-Speicher
- 13: manipulationssicherer Bereich
- 14: Kommunikationsschnittstelle
- 15: Sicherheitsmodulbereich
- SK1, SK2, SK3: kryptographischer Schlüssel
- CT1-CT7: Steuersignal

## Patentansprüche

1. Hardware-Einrichtung (1, 10, 11), umfassend:
eine Speichereinrichtung (4) zum Bereitstellen einer ersten Version (PRG1) eines mit einem ersten kryptographischen Schlüssel (SK1) verschlüsselt abgespeicherten Steuerprogramms (PRG) und einer zweiten Version (PRG2) des mit einem zweiten kryptographischen Schlüssel (SK2) verschlüsselt abgespeicherten Steuerprogramms (PRG);
ein erstes Sicherheitsmodul (3) mit dem ersten gespeicherten kryptographischen Schlüssel (SK1) zum Entschlüsseln der ersten Version (PRG1) des Steuerprogramms (PRG);
ein zweites Sicherheitsmodul (5) mit dem zweiten gespeicherten kryptographischen Schlüssel (SK2) zum Entschlüsseln der zweiten Version (PRG2) des Steuerprogramms (PRG); und
eine Verarbeitungsplattform (2) zum Ausführen des Steuerprogramms (PRG), wobei die Verarbeitungsplattform (2) derart eingerichtet ist, dass das Steuerprogramm (PRG) mittels des ersten kryptographischen Schlüssels (SK1) aus der ersten Version (PRG1) oder zweiten kryptographischen Schlüssels (SK2) aus der zweiten Version (PRG2) entschlüsselt wird.

2. Hardware-Einrichtung (1, 10, 11) nach Anspruch 1, ferner umfassend ein drittes Sicherheitsmodul (6) mit einem dritten gespeicherten kryptographischen Schlüssel (SK3) zum Entschlüsseln einer durch die Speichereinrichtung (4) bereitgestellten dritten Version (PRG3) des mit dem dritten kryptographischen Schlüssel (SK3) verschlüsselt abgespeicherten Steuerprogramms (PRG).

3. Hardware-Einrichtung (1, 10, 11) nach Anspruch 1 oder 2, wobei in den Sicherheitsmodulen (3, 5, 6) die kryptographischen Schlüssel (SK1, SK2, SK3) mittels unterschiedlicher Sicherheitsverfahren abgespeichert sind.

4. Hardware-Einrichtung (1, 10, 11) nach einem der Ansprüche 2 oder 3, wobei das erste, zweite oder dritte Sicherheitsmodul (3, 5, 6) eingerichtet ist, um den ersten, zweiten oder dritten kryptographischen Schlüssel (SK1, SK2, SK3) mittels Code-Obfuscation oder White-Box-Kryptographie abzuspeichern.

5. Hardware-Einrichtung (10, 11) nach einem der Ansprüche 2 bis 4, wobei das erste, zweite oder dritte Sicherheitsmodul (3, 5, 6) eine Schnittstelle (14) für ein externes Speichermedium (5) umfasst und der erste, zweite oder dritte kryptographische Schlüssel (SK1, SK2, SK3) auf dem externen Speichermedium (5) abgespeichert ist.

6. Hardware-Einrichtung (1, 10, 11) nach Anspruch 5, wobei auf dem Speichermedium (5) ferner ein Entschlüsselungsprogramm zum Entschlüsseln von einer in der Speichereinrichtung (1, 10, 1) bereitgestellten Version (PRG1, PRG2, PRG3) in das Steuerprogramm (PRG) abgespeichert ist.

7. Hardware-Einrichtung (10, 11) nach einem der Ansprüche 2 bis 6, wobei das erste, zweite oder dritte Sicherheitsmodul (6, 13) einen manipulationssicheren Speicher zum Speichern des ersten, zweiten oder dritten kryptographischen Schlüssels (SK1, SK2, SK3) aufweist.

8. Hardware-Einrichtung (1, 10, 11) nach einem der Ansprüche 2 bis 7, wobei das erste, zweite oder dritte Sicherheitsmodul (6, 13) eingerichtet ist, um den ersten, zweiten oder dritten kryptographischen Schlüssel (SK1, SK2, SK3) mittels eines Verfahrens der Tamper-Detection oder Tamper-Reaction abzuspeichern.

9. Hardware-Einrichtung (1, 10, 11) nach einem der Ansprüche 1 bis 8, wobei mindestens eines der Sicherheitsmodule (3, 5, 6) den kryptographischen Schlüssel eines anderen Sicherheitsmoduls (3, 5 ,6) abgespeichert umfasst.

10. Hardware-Einrichtung (1, 10, 11) nach einem der Ansprüche 1 bis 9, wobei die kryptographischen Schlüssel (SK1, SK2, SK3) unabhängig voneinander erzeugt sind.

11. Hardware-Einrichtung (1, 10, 11) nach einem der Ansprüche 1 bis 10, wobei die kryptographischen Schlüssel (SK1, SK2, SK3) asymmetrische Schlüssel sind.

12. Hardware-Einrichtung (1, 10, 11) nach einem der Ansprüche 1 bis 11, wobei die kryptographischen Schlüssel (SK1, SK2, SK3) ferner zum Verschlüsseln von Daten geeignet ist.

13. Hardware-Einrichtung (1, 10, 11) nach einem der Ansprüche 1 bis 12, ferner umfassend weitere Sicherheitsmodule mit weiteren gespeicherten kryptographischen Schlüsseln zum Entschlüsseln von gespeicherten Daten.

14. Hardware-Einrichtung (1, 10, 11) nach einem der Ansprüche 1 bis 13, wobei die Hardware-Einrichtung (1) eine programmierbare Steuereinrichtung eines Automatisierungssystems ist.

## Claims

1. Hardware device (1, 10, 11) comprising:
a memory device (4) for providing a first version (PRG1) of a control program (PRG) stored in a form encrypted with a first cryptographic key (SK1) and for providing a second version (PRG2) of the control program (PRG) stored in a form encrypted with a second cryptographic key (SK2);
a first security module (3) having the first stored cryptographic key (SK1) for decrypting the first version (PRG1) of the control program (PRG);
a second security module (5) having the second stored cryptographic key (SK2) for decrypting the second version (PRG2) of the control program (PRG); and
a processing platform (2) for executing the control program (PRG), the processing platform (2) being set up in such a manner that the control program (PRG) is decrypted using the first cryptographic key (SK1) from the first version (PRG1) or the second cryptographic key (SK2) from the second version (PRG2).

2. Hardware device (1, 10, 11) according to Claim 1, also comprising a third security module (6) having a third stored cryptographic key (SK3) for decrypting a third version (PRG3) of the control program (PRG) stored in a form encrypted with the third cryptographic key (SK3), which third version is provided by the memory device (4).

3. Hardware device (1, 10, 11) according to Claim 1 or 2, the cryptographic keys (SK1, SK2, SK3) being stored in the security modules (3, 5, 6) using different security methods.

4. Hardware device (1, 10, 11) according to either of Claims 2 and 3, the first, second or third security module (3, 5, 6) being set up to store the first, second or third cryptographic key (SK1, SK2, SK3) using code obfuscation or white box cryptography.

5. Hardware device (10, 11) according to one of Claims 2 to 4, the first, second or third security module (3, 5, 6) comprising an interface (14) for an external storage medium (5), and the first, second or third cryptographic key (SK1, SK2, SK3) being stored on the external storage medium (5).

6. Hardware device (1, 10, 11) according to Claim 5, the storage medium (5) also storing a decryption program for decrypting a version (PRG1, PRG2, PRG3) provided in the memory device (4) into the control program (PRG).

7. Hardware device (10, 11) according to one of Claims 2 to 6, the first, second or third security module (6, 13) having a tamperproof memory for storing the first, second or third cryptographic key (SK1, SK2, SK3).

8. Hardware device (1, 10, 11) according to one of Claims 2 to 7, the first, second or third security module (6, 13) being set up to store the first, second or third cryptographic key (SK1, SK2, SK3) using a tamper detection or tamper reaction method.

9. Hardware device (1, 10, 11) according to one of Claims 1 to 8, at least one of the security modules (3, 5, 6) storing the cryptographic key of another security module (3, 5, 6).

10. Hardware device (1, 10, 11) according to one of Claims 1 to 9, the cryptographic keys (SK1, SK2, SK3) being generated independently of one another.

11. Hardware device (1, 10, 11) according to one of Claims 1 to 10, the cryptographic keys (SK1, SK2, SK3) being asymmetrical keys.

12. Hardware device (1, 10, 11) according to one of Claims 1 to 11, the cryptographic keys (SK1, SK2, SK3) also being suitable for encrypting data.

13. Hardware device (1, 10, 11) according to one of Claims 1 to 12, also comprising further security modules having further stored cryptographic keys for decrypting stored data.

14. Hardware device (1, 10, 11) according to one of Claims 1 to 13, the hardware device (1) being a programmable control device of an automation system.

## Revendications

1. Dispositif matériel (1, 10, 11), comprenant :
- un dispositif de mémoire (4) pour mettre à disposition une première version (PRG1) d'un programme de commande (PRG) sauvegardé de manière cryptée avec une première clé cryptographique (SK1) et une deuxième version (PRG2) du programme de commande (PRG) sauvegardé de manière cryptée avec une deuxième clé cryptographique (SK2) ;
- un premier module de sécurité (3) avec la première clé cryptographique stockée (SK1) pour décrypter la première version (PRG1) du programme de commande (PRG) ;
- un deuxième module de sécurité (5) avec la deuxième clé cryptographique stockée (SK2) pour décrypter la deuxième version (PRG2) du programme de commande (PRG) ; et
- une plate-forme de traitement (2) pour exécuter le programme de commande (PRG), la plate-forme de traitement (2) étant configurée de telle sorte que le programme de commande (PRG) est décrypté au moyen de la première clé cryptographique (SK1) à partir de la première version (PRG1) ou de la deuxième clé cryptographique (SK2) à partir de la deuxième version (PRG2).

2. Dispositif matériel (1, 10, 11) selon la revendication 1, comprenant en outre un troisième module de sécurité (6) avec une troisième clé cryptographique stockée (SK3) pour décrypter une troisième version (PRG3), mise à disposition par le dispositif de mémoire (4), du programme de commande (PRG) sauvegardé de manière cryptée avec la troisième clé cryptographique (SK3).

3. Dispositif matériel (1, 10, 11) selon la revendication 1 ou 2, les clés cryptographiques (SK1, SK2, SK3) étant sauvegardées au moyen de différents procédés de sécurité dans les modules de sécurité (3, 5, 6).

4. Dispositif matériel (1, 10, 11) selon l'une des revendications 2 ou 3, le premier, le deuxième ou le troisième module de sécurité (3, 5, 6) étant configuré pour sauvegarder la première, la deuxième ou la troisième clé cryptographique (SK1, SK2, SK3) au moyen d'une obfuscation de code ou de la cryptographie boîte blanche.

5. Dispositif matériel (10, 11) selon l'une des revendications 2 à 4, le premier, le deuxième ou le troisième module de sécurité (3, 5, 6) comprenant une interface (14) pour un support de mémoire externe (5) et la première, la deuxième ou la troisième clé cryptographique (SK1, SK2, SK3) étant sauvegardée sur le support de mémoire externe (5).

6. Dispositif matériel (1, 10, 11) selon la revendication 5, sur le support de mémoire (5) étant en outre sauvegardé un programme de décryptage pour le décryptage d'une version (PRG1, PRG2, PRG3) mise à disposition dans le dispositif de mémoire (1, 10, 11) pour obtenir le programme de commande (PRG).

7. Dispositif matériel (10, 11) selon l'une des revendications 2 à 6, le premier, le deuxième ou le troisième module de sécurité (6, 13) comportant une mémoire protégée contre la manipulation pour stocker la première, la deuxième ou la troisième clé cryptographique (SK1, SK2, SK3).

8. Dispositif matériel (1, 10, 11) selon l'une des revendications 2 à 7, le premier, le deuxième ou le troisième module de sécurité (6, 13) étant configuré pour sauvegarder la première, la deuxième ou la troisième clé cryptographique (SK1, SK2, SK3) au moyen d'un procédé de détection de manipulation ou de réaction à une manipulation.

9. Dispositif matériel (1, 10, 11) selon l'une des revendications 1 à 8, au moins l'un des modules de sécurité (3, 5, 6) comprenant la clé cryptographique d'un autre module de sécurité (3, 5, 6).

10. Dispositif matériel (1, 10, 11) selon l'une des revendications 1 à 9, les clés cryptographiques (SK1, SK2, SK3) étant générées indépendamment les unes des autres.

11. Dispositif matériel (1, 10, 11) selon l'une des revendications 1 à 10, les clés cryptographiques (SK1, SK2, SK3) étant des clés asymétriques.

12. Dispositif matériel (1, 10, 11) selon l'une des revendications 1 à 11, les clés cryptographiques (SK1, SK2, SK3) étant en outre adaptées pour le cryptage de données.

13. Dispositif matériel (1, 10, 11) selon l'une des revendications 1 à 12, comprenant en outre d'autres modules de sécurité avec d'autres clés cryptographiques stockées pour le décryptage de données stockées.

14. Dispositif matériel (1, 10, 11) selon l'une des revendications 1 à 13, le dispositif matériel (1) étant un dispositif de commande programmable d'un système d'automatisation.
